# EUROPEAN PATENT SPECIFICATION

(11) **EP 3 995 449 B1**
(45) Date of publication and mention of the grant of the patent: **06.05.2026**
(21) Application number: 21171817.6
(22) Date of filing: 03.05.2021
(51) Int. Cl.: C01B 39/02, C01B 39/48, B01J 29/072

(54) **METHOD OF PREPARING SCR CATALYST**
VERFAHREN ZUR HERSTELLUNG EINES SCR-KATALYSATORS
PROCÉDÉ DE PRÉPARATION D'UN CATALYSEUR SCR

(30) Priority: 04.11.2020 KR 20200146180
(43) Date of publication of application: 11.05.2022
(73) Proprietor: HYUNDAI MOTOR COMPANY, Seoul 06797 (KR); Kia Corporation, Seocho-gu Seoul 06797 (KR); Industry Foundation of Chonnam National University, Gwangju 61186 (KR)
(72) Inventor: YOON, Dalyoung, 18280 Gyeonggi-do (KR); CHO, Sung June, 18280 Gyeonggi-do (KR); PARK, Soon Hee, 18280 Gyeonggi-do (KR)
(74) Representative: Isarpatent

(56) References cited:
- WO-A1-2013/159825
- US-A1- 2019 300 375

## Description

### CROSS-REFERENCE TO RELATED APPLICATION

### BACKGROUND

### (a) Field

The present disclosure relates to a method of preparing an SCR catalyst, and more particularly, to a method of preparing an SCR catalyst having improved thermal durability and NOx purification performance.

### (b) Description of the Related Art

Zeolite is a porous material that fine pores with unique and regular shapes and sizes are well developed.

Acidity of the zeolite may be controlled within a wide range by varying an amount of aluminum present in the skeleton and zeolite has a large specific surface area and may exchange cations, and therefore the zeolite is widely used as a catalyst or an adsorbent in the field of fine chemistry.

Recently, a selective catalytic reduction (SCR) reaction has been commercialized in a post-treatment device for removing nitrogen oxides from automobile exhaust gas according to environmental regulations. As a catalyst for the reaction, copper ion-exchanged Cu/CHA exhibits high activity over a wide temperature range and excellent hydrothermal stability, compared with other zeolites, and thus draws a great interest.

In addition, recently, a technology of coating the SCR catalyst on a diesel particulate filter (DPF) to increase NOx purification performance has been developed, but in order to apply the SCR catalyst to DPF, a catalyst having higher thermal durability and excellent NOx purification performance is required. However, when the aluminum present in the zeolite skeleton is exposed to hot water vapor, the aluminum may be eluted out of the skeleton and thus the structure of the zeolite may collapse, resulting in deteriorating catalytic activity. In addition, since various types of cations present in the zeolite also affect hydrothermal stability, the contents of these components should be controlled in order to increase the hydrothermal stability of the zeolite.

US2019/300375 Al discloses a method of preparing an SCR catalyst comprising preparing a synthetic mother liquid that includes a source of silica and alumina including zeolite Y and silica, a structure-inducing material, a complexing material and a solvent; reacting the synthetic mother liquid to prepare CHA zeolite; and ion-exchanging the prepared CHA zeolite with a transition metal.

### SUMMARY

An object of the present disclosure is to provide a method of preparing an SCR catalyst having a Si/Al mole ratio of greater than or equal to about 15, maintaining a zeolite structure even after degradation, and having excellent thermal durability and NOx purification performance.

According to an embodiment of the present disclosure, a method of preparing a SCR (Selective Catalytic Reduction) catalyst includes preparing a synthetic mother liquid that includes a source of silica and alumina including zeolite A and silica, a structure-inducing material, a complexing material, and a solvent, reacting the synthetic mother liquid to prepare CHA zeolite, and ion-exchanging the prepared CHA zeolite with a transition metal.

The zeolite A is an NH₄-exchanged zeolite A.

The silica may be fumed silica or colloidal silica.

The structure-inducing material is trimethyladamantyl ammonium hydroxide (AdaOH).

The complexing material may be an alkali hydroxide solution including sodium hydroxide.

The synthetic mother liquid may include about 5 mol% to about 30 mol% of the zeolite A and about 70 mol% to about 95 mol% of the silica based on a total amount of the source of silica and alumina.

The synthetic mother liquid may include about 0.1 parts by mole to about 0.4 parts by mole of the structure-inducing material and about 0.1 parts by mole to about 0.4 parts by mole of the complexing material based on 1 part by mole of the source of silica and alumina.

In the second process, the reaction may be performed under conditions of about 120 °C to about 140 °C, about 2 days to about 6 days, and about 0 rpm to about 60 rpm.

In the second process, after the reaction, the method may further include firing at about 500 °C to about 600 °C for 4 to 12 hours.

The CHA zeolite prepared in the second process may have a Si/Al mole ratio of about 15 to about 30.

The transition metal may include Cu, Fe, Co, Ti, Zn, Ag, Mn, or a combination thereof.

The SCR catalyst may include about 1 wt% to about 5 wt% of the transition metal based on the total catalyst.

In the third process, the ion-exchanging may be performed at about 25 °C to about 80 °C for about 1 hour to about 24 hours.

The preparation method of the SCR catalyst according to the present disclosure may provide an SCR catalyst having a Si/Al mole ratio of greater than or equal to about 15 and maintaining the zeolite structure after the degradation and thus having high thermal durability and excellent NOx purification performance.

### BRIEF DESCRIPTION OF THE DRAWINGS

FIG. 1 is a process flow chart showing a method of preparing an SCR catalyst according to an embodiment of the present disclosure.
FIGS. 2, 3, and 4 are electron microscope photographs showing CHA zeolites according to comparative example and Examples 1 and 2.
FIG. 5 is a graph showing XRD measurement results of the CHA zeolites according to the comparative example and Examples 1 and 2.
FIGS. 6 and 7 are graphs showing MAS NMR measurement results of the CHA zeolites according to the comparative example and Examples 1 and 2.
FIGS. 8 and 9 are graphs showing XRD measurement results before and after the degradation of SCR catalysts according to comparative example and Examples 1 and 2.
FIGS. 10 and 11 are nitrogen adsorption isothermal curves of the SCR catalysts according to the comparative example and Examples 1 and 2.
FIGS. 12 and 13 are graphs showing NOx conversion rates and performance decrease rates of the SCR catalysts according to the comparative example and Examples 1 and 2.

### DETAILED DESCRIPTION OF THE EMBODIMENTS

This disclosure will be described more fully hereinafter in the following detailed description, in which some but not all embodiments of this disclosure are described with reference to the attached drawings. This disclosure may be embodied in many different forms and is not be construed as limited to the embodiments set forth herein. Unless otherwise defined, all terms used in the specification (including technical and scientific terms) may be used with meanings commonly understood by a person having ordinary knowledge in the art. Further, unless explicitly defined to the contrary, the terms defined in a generally-used dictionary are not ideally or excessively interpreted.

In addition, unless explicitly described to the contrary, the word "comprise," and variations such as "comprises" or "comprising," will be understood to imply the inclusion of stated elements but not the exclusion of any other elements.

Unless specifically described to the contrary, a singular form includes a plural form.

A method of preparing a SCR (Selective Catalytic Reduction) catalyst according to an embodiment of the present disclosure includes preparing a synthetic mother liquid that includes a source of silica and alumina including zeolite A and silica, a structure-inducing material, a complexing material, and a solvent, reacting the synthetic mother liquid to prepare CHA zeolite, and ion-exchanging the prepared CHA zeolite with a transition metal.

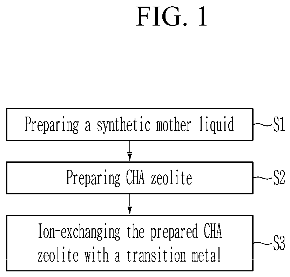

FIG. 1 is a process flow chart showing a method of preparing an SCR catalyst according to an embodiment of the present disclosure. Hereinafter, referring to FIG. 1, the method of preparing an SCR catalyst is described.

First, synthetic mother liquid including a source of silica and alumina, a structure-inducing material, a complexing material, and a solvent is prepared at S1.

When the zeolite A is used as the source of silica and alumina, CHA zeolite having an Si/Al mole ratio of about 15 to about 30 may be synthesized.

The zeolite A is NH₄-exchanged zeolite A. When the zeolite A is the NH₄-exchanged zeolite A, CHA zeolite having an Si/Al mole ratio of about 15 to about 30 may be synthesized.

The silica may be fumed silica or colloidal silica. When the zeolite A is reacted with the fumed silica or silica, CHA zeolite having an Si/Al mole ratio of about 15 to about 30 may be prepared.

When the CHA zeolite has an Si/Al mole ratio of less than about 15, high temperature durability may be deteriorated, and when the CHA zeolite has an Si/Al mole ratio of greater than about 30, transition metals may not be sufficiently supported.

The synthetic mother liquid may further include, for example, sodium aluminate (NaAlO₂), AlCl₃, Al₂(SO₄)₃, aluminum hydroxide (Al(OH)₃), kaolin, clay, zeolite, or a combination thereof as an additional alumina source. In addition, the synthetic mother liquid may further include zeolite, silicate, silica hydrogel, silicic acid, tetraalkyl orthosilicate, silica hydroxide, precipitated silica, or a combination thereof as an additional silica source.

The synthetic mother liquid may include the zeolite A in an amount of about 5 mol% to about 30 mol%, for example, about 5 mol% to about 20 mol% and the silica in an amount of about 70 mol% to about 95 mol%, for example, about 80 mol% to about 95 mol% based on a total amount of the source of silica and alumina. When the zeolite A is included in an amount of less than about 5 mol% or greater than about 30 mol%, amorphous products or impurities may be generated. When the silica is included in an amount of less than about 70 mol% or greater than about 95 mol%, likewise, the amorphous products or impurities may also be generated.

The structure-inducing material is trimethyladamantyl ammonium hydroxide (AdaOH). In addition, a generally-used structure-inducing material for preparing CHA may also be included. The complexing material may be an alkali hydroxide solution including sodium hydroxide.

The synthetic mother liquid may include about 0.1 parts by mole to about 0.4 parts by mole of the structure-inducing material and about 0.1 parts by mole to about 0.4 parts by mole of the complexing material based on 1 part by mole of the source of silica and alumina. According to the amount of the complexing material added to the synthetic mother liquid, an amount of aluminum present in the synthesized CHA zeolite skeleton may vary, and thereby hydrothermal characteristics may vary.

Subsequently, the synthetic mother liquid is reacted to prepare CHA zeolite at S2.

Specifically, the synthetic mother liquid is reacted at about 120 °C to about 140 °C for about 2 days to about 6 days, while rotated at about 0 rpm to about 60 rpm and then, separated through centrifugation, washed, and fired at about 500 °C to about 600 °C for about 4 hours to about 12 hours to prepare CHA zeolite.

On the other hand, the CHA zeolite may be Na-formed CHA zeolite, and optionally, preparing NH₄-formed CHA zeolite may be further included by ion-exchanging the Na-formed CHA zeolite with cations. Specifically, the Na-formed CHA zeolite is dipped in a 1.5 M ammonium nitrate aqueous solution and then, stirred at about 60 °C to about 80 °C for greater than or equal to about 3 hours, which may be three times repeated to ion-exchange it into the form of NH₄⁺, and then, washed, dried, and fired to obtain the NH₄-formed CHA zeolite.

Subsequently, the prepared CHA zeolite is ion-exchanged with a transition metal at S3.

Specifically, the ion-exchange of the CHA zeolite with transition metals may be performed using an ion-exchanging method of adding the CHA zeolite to a solution including a precursor of the transition metal to support the transition metal on the CHA zeolite.

The transition metal may include Cu, Fe, Co, Ti, Zn, Ag, Mn, or a combination thereof. The precursor of the transition metal may include nitrate, hydrochloride, acetate, or sulfate. For example, when the metal is Cu, the metal oxide precursor may be copper nitrate (II) (Cu(NO₃)₂) or copper acetate (Cu acetate).

The solvent may include distilled water, deionized water, ethanol, methanol, ethylene glycol, propylene glycol, isopropyl alcohol, or a combination thereof.

The ion-exchanging may be performed at about 25 °C to about 80 °C for about 1 hour to about 24 hours depending on a type of the transition metal and an amount of exchanged ions.

On the other hand, the prepared SCR catalyst may be hydrothermally treated for a hydrothermal stability test. The hydrothermal treatment may be performed for about 12 hours, while flowing air containing about 10% of water at about 100 ml/min into a catalyst layer heated at about 800 °C to about 900 °C.

The SCR catalyst according to an embodiment of the present disclosure is prepared in the preparation method.

The SCR catalyst may be coated on a catalyst substrate such as a honeycomb including a wall-flow filter substrate or a through-flow substrate, and an NOx level in the exhaust gas may be reduced by contacting the SCR catalyst with the gas for sufficient time and temperature to reduce the NOx level in the gas.

Hereinafter, specific examples of the disclosure are presented. However, the examples described below are for illustrative purposes only, and the scope of the disclosure is not limited thereto.

### Preparation Example: Preparation of SCR Catalyst

### Comparative Example

A synthetic mother liquid was prepared with the composition shown in Table 1 below.

The synthetic mother liquid was mixed and put in an autoclave and then, reacted for 4 days, while rotated at 40 rpm at 140 °C, separated through centrifugation, washed, and fired at 550 °C for 12 hours to obtain CHA zeolite (CHA-1).

The CHA zeolite was added to a 1.0 M copper acetate aqueous solution and ion-exchanged at 25 °C for 24 hours and then, washed, dried, and fired to prepare a copper ion-exchanged CHA zeolite (Cu/CHA-1).

### Example 1

CHA zeolite (CHA-2A) and copper ion-exchanged CHA zeolite (Cu/CHA-2A) were prepared according to the same method as the comparative example except that the synthetic mother liquid was prepared with the composition shown in Table 1.

### Example 2

CHA zeolite (CHA-2B) and copper ion-exchanged CHA zeolite (Cu/CHA-2B) were prepared according to the same method as the comparative example except that the synthetic mother liquid was prepared with the composition shown in Table 1.

**Table 1**

| | Composition of synthetic mother liquid (part by mole) | | | |
|---|---|---|---|---|
| | Si and Al source | SDA¹⁾ | NaOH | H₂O |
| Comparative Example (CHA-1) | 1.0 (FAU + sodium silicate solution) | 0.12 | 0.08 | 33.0 |
| Example 1 (CHA-2A) | 1.0 (NH₄ form A-zeolite + fumed silica) | 0.20 | 0.20 | 22.6 |
| Example 2 (CHA-2B) | 1.0 (NH₄ form A-zeolite + colloidal silica) | 0.20 | 0.20 | 22.6 |

| | | | | |
|---|---|---|---|---|
| 1) SDA: trimethyladamantyl ammonium hydroxide (AdaOH) | | | | |

### Experimental Example 1: Measurement of Physicochemical Characteristics of CHA Zeolite

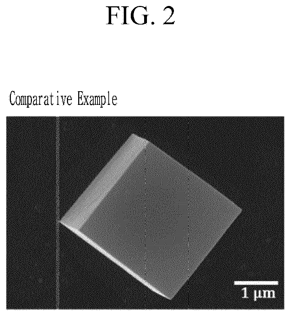

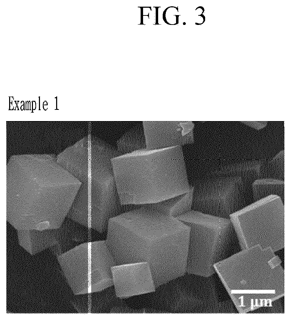

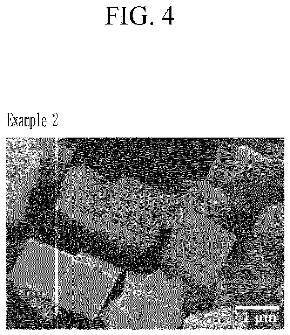

Physicochemical characteristics of the CHA zeolites according to the comparative example and Examples 1 and 2 were measured, and the results are shown in Table 2. In addition, electron microscopic photographs of the CHA zeolites according to the comparative example and Examples 1 and 2 were respectively shown in FIGS. 2 to 4.

**Table 2**

| | Si/Al (EDX) | Particle size (µm) | S_{BET} (m²/g) | Vₚ (cm³/g) | Acidity (mmol/g) | | |
|---|---|---|---|---|---|---|---|
| | | | | | Sum | Weak | Strong |
| Comparative Example(CHA-1) | 4.3 | 2.2 | 579 | 0.29 | 1.77 | 0.87 | 0.90 |
| Example 1(CHA-2A) | 19.1 | 1.1 | 620 | 0.32 | 0.78 | 0.35 | 0.43 |
| Example 2(CHA-2B) | 24.0 | 1.1 | 630 | 0.33 | 0.97 | 0.44 | 0.53 |

Referring to Table 2 and FIGS. 2 to 4, in the comparative example and Examples 1 and 2, cube-shaped particles having a uniform size were produced.

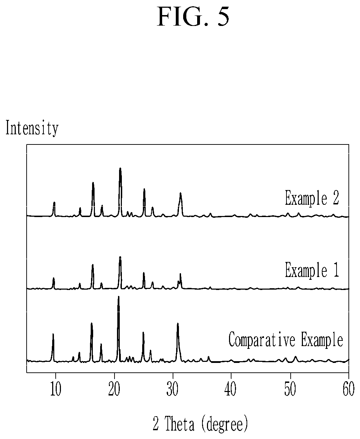

FIG. 5 is a graph showing XRD measurement results of the CHA zeolites according to the comparative example and Examples 1 and 2.

Referring to FIG. 5, pure CHA zeolite having excellent crystallinity and not mixed with impurities was produced.

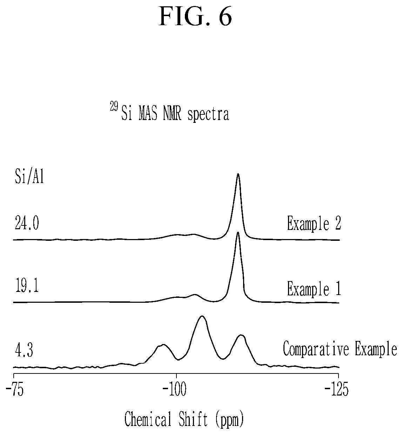

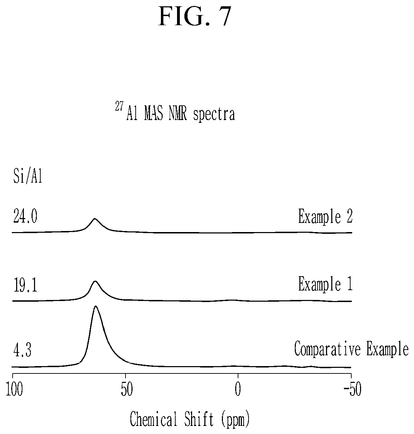

FIGS. 6 and 7 are graphs showing MAS NMR measurement results of the CHA zeolites according to the comparative example and Examples 1 and 2. FIG. 6 is a graph with respect to silicon (Si), and FIG. 7 is a graph with respect to aluminum (Al).

Referring to FIGS. 6 and 7, both silicon and aluminum were in tetrahedral coordination inside the zeolite skeleton.

### Experimental Example 2: Performance Evaluation of SCR Catalyst

After hydrothermally treating (degrading) the CHA zeolites ion-exchanged with copper according to the comparative example and Examples 1 and 2 for 12 hours, while flowing air containing 10 % water at 100 ml/min into a catalyst layer heated to 900 °C, performance of SCR catalysts before and after the degradation was evaluated.

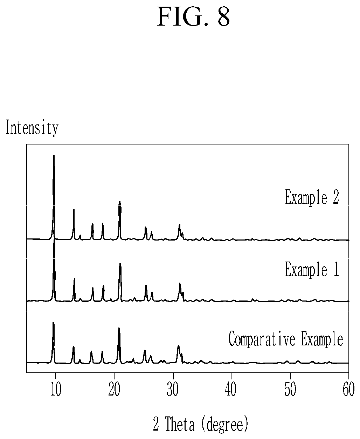

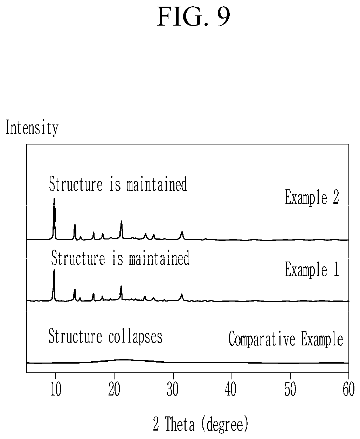

FIGS. 8 and 9 are graphs showing XRD measurement results before and after the degradation of the SCR catalysts in the comparative example and Examples 1 and 2. FIG. 8 is a graph showing the SCR catalyst before the degradation, and FIG. 9 is a graph showing the SCR catalyst after the degradation.

Referring to FIGS. 8 and 9, even after the degradation, the SCR catalysts according to Examples 1 and 2 maintained the zeolite structure and thus exhibited excellent heat resistance, compared with the SCR catalyst according to the comparative example.

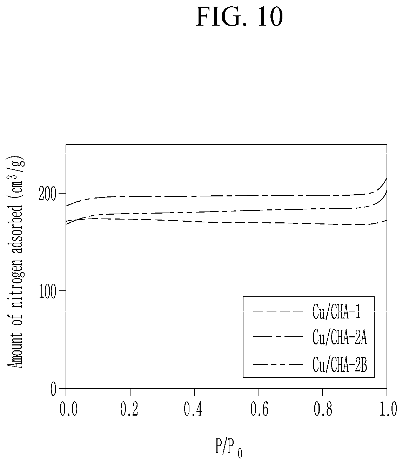

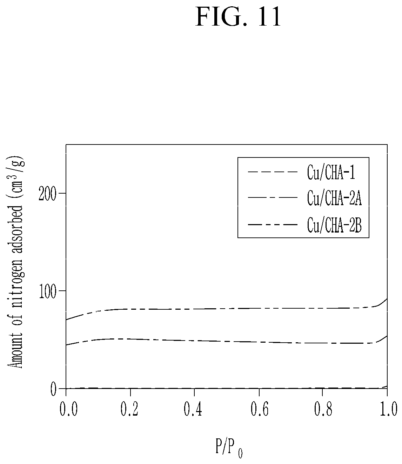

Nitrogen adsorption experiments of the SCR catalysts according to the comparative example and Examples 1 and 2 were conducted, and the results are shown in Table 3 and FIGS. 10 and 11. FIGS. 10 and 11 respectively show nitrogen adsorption isothermal curves before and after the degradation of the SCR catalysts according to the comparative example and Examples 1 and 2.

**Table 3**

| | Si/Al¹⁾ | Cu content¹⁾ (wt%) | 2 S_{BET} (m²/g) | | Vₚ (cm 3/g) | |
|---|---|---|---|---|---|---|
| | | | Before degradation | After degradation | Before degradation | After degradation |
| Comparative Example (Cu/CHA-1) | 4.3 | 2.4 | 544 | 1 | 0.27 | 0.01 |
| Example 1 (Cu/CHA-2A) | 19.1 | 2.8 | 633 | 165 | 0.34 | 0.09 |
| Example 2 (Cu/CHA-2B) | 24.0 | 1.9 | 582 | 264 | 0.31 | 0.15 |

| | | | | | | |
|---|---|---|---|---|---|---|
| 1) EDX Measurement Result | | | | | | |

Referring to Table 3 and FIGS. 10 and 11, after the degradation, the SCR catalysts according to Examples 1 and 2 exhibited a larger specific surface area and thus more excellent heat resistance than the SCR catalyst according to the comparative example.

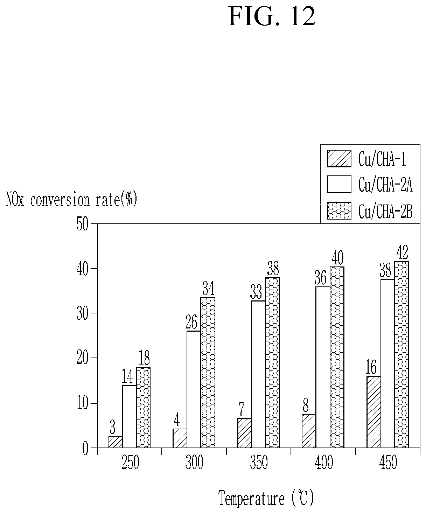

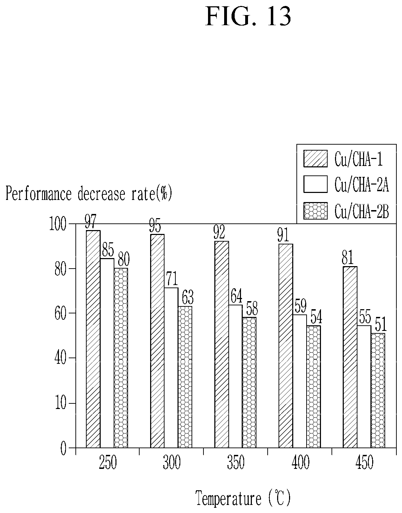

FIGS. 12 and 13 are graphs showing NOx conversion rates and performance decrease rates of the SCR catalysts according to the comparative example and Examples 1 and 2.

Referring to FIGS. 12 and 13, as the Si/Al mole ratio of CHA zeolite increased, the SCR catalyst had better performance after the degradation at 900 °C, that is, excellent heat resistance and in addition, a lower performance decrease rate.

## Claims

1. A method of preparing a SCR (Selective Catalytic Reduction) catalyst, comprising:
preparing a synthetic mother liquid that includes a source of silica and alumina including zeolite A and silica, a structure-inducing material, a complexing material, and a solvent;
reacting the synthetic mother liquid to prepare CHA zeolite; and
ion-exchanging the prepared CHA zeolite with a transition metal,
wherein the zeolite A is NH₄-exchanged zeolite A, and
wherein the structure-inducing material comprises trimethyladamantyl ammonium hydroxide (AdaOH).

2. The method of claim 1, wherein the silica is fumed silica or colloidal silica.

3. The method of claim 1, wherein the complexing material is an alkali hydroxide solution including sodium hydroxide.

4. The method of claim 1, wherein the synthetic mother liquid comprises about 5 mol% to about 30 mol% of the zeolite A and about 70 mol% to about 95 mol% of the silica based on a total amount of the source of silica and alumina.

5. The method of claim 1, wherein the synthetic mother liquid comprises:
about 0.1 parts by mole to about 0.4 parts by mole of the structure-inducing material; and
about 0.1 parts by mole to about 0.4 parts by mole of the complexing material based on 1 part by mole of the source of silica and alumina.

6. The method of claim 1, wherein in the second process, the reaction is performed under conditions of about 120 °C to about 140 °C, about 2 days to about 6 days, and about 0 rpm to about 60 rpm.

7. The method of claim 1, wherein in the second process, after the reaction, the method further comprises firing at about 500 °C to about 600 °C for 4 to 12 hours.

8. The method of claim 1, wherein the CHA zeolite prepared in the second process has a Si/Al mole ratio of about 15 to about 30.

9. The method of claim 1, wherein the transition metal comprises Cu, Fe, Co, Ti, Zn, Ag, Mn, or a combination thereof.

10. The method of claim 1, wherein the SCR catalyst comprises about 1 wt% to about 5 wt% of the transition metal based on the total catalyst.

11. The method of claim 1, wherein in the third process, the ion-exchanging is performed at about 25 °C to about 80 °C for about hour to about 24 hours.

## Patentansprüche

1. Verfahren zur Herstellung eines Katalysators zur selektiven katalytischen Reduktion (SCR-Katalysators), umfassend:
Herstellen einer synthetischen Mutterlauge, die eine Quelle von Siliciumdioxid und Aluminiumoxid, die Zeolith A und Siliciumdioxid umfasst, ein strukturerzeugendes Material, ein komplexbildendes Material und ein Lösungsmittel umfasst;
Umsetzen der synthetischen Mutterlauge zum Herstellen von CHA-Zeolith; und
Ionenaustausch des hergestellten CHA-Zeoliths mit einem Übergangsmetall,
wobei der Zeolith A NH₄-ausgetauschter Zeolith A ist, und
wobei das strukturerzeugende Material Trimethyladamantylammoniumhydroxid (AdaOH) umfasst.

2. Verfahren nach Anspruch 1, wobei das Siliciumdioxid pyrogenes Siliciumdioxid oder kolloidales Siliciumdioxid ist.

3. Verfahren nach Anspruch 1, wobei das komplexbildende Material eine Natriumhydroxid enthaltende Alkalihydroxidlösung ist.

4. Verfahren nach Anspruch 1, wobei die synthetische Mutterlauge etwa 5 Mol-% bis etwa 30 Mol-% des Zeolith A und etwa 70 Mol-% bis etwa 95 Mol-% des Siliciumdioxids, bezogen auf eine Gesamtmenge der Quelle von Siliciumdioxid und Aluminiumoxid, umfasst.

5. Verfahren nach Anspruch 1, wobei die synthetische Mutterlauge umfasst:
etwa 0,1 Molteile bis etwa 0,4 Molteile des strukturerzeugenden Materials; und
etwa 0,1 Molteile bis etwa 0,4 Molteile des komplexbildenden Materials, bezogen auf 1 Molteil der Quelle von Siliciumdioxid und Aluminiumoxid.

6. Verfahren nach Anspruch 1, wobei in dem zweiten Prozess die Umsetzung unter Bedingungen von etwa 120 °C bis etwa 140 °C, etwa 2 Tagen bis etwa 6 Tagen und etwa 0 U/min bis etwa 60 U/min durchgeführt wird.

7. Verfahren nach Anspruch 1, wobei in dem zweiten Prozess, nach der Umsetzung, das Verfahren ferner das Brennen bei etwa 500 °C bis etwa 600 °C über 4 bis 12 Stunden umfasst.

8. Verfahren nach Anspruch 1, wobei der in dem zweiten Prozess hergestellte CHA-Zeolith ein Si/Al-Molverhältnis von etwa 15 bis etwa 30 aufweist.

9. Verfahren nach Anspruch 1, wobei das Übergangsmetall Cu, Fe, Co, Ti, Zn, Ag, Mn, oder eine Kombination davon umfasst.

10. Verfahren nach Anspruch 1, wobei der SCR-Katalysator etwa 1 Gew.-% bis etwa 5 Gew.-% des Übergangsmetalls, bezogen auf den gesamten Katalysator, umfasst.

11. Verfahren nach Anspruch 1, wobei in dem dritten Prozess der Ionenaustausch bei etwa 25 °C bis etwa 80 °C über etwa 1 Stunde bis etwa 24 Stunden durchgeführt wird.

## Revendications

1. Procédé de préparation d'un catalyseur SCR (réduction catalytique sélective), comprenant :
la préparation d'une liqueur mère synthétique qui comporte une source de silice et d'alumine comportant de la zéolithe A et de la silice, un matériau inducteur de structure, un matériau de complexation et un solvant ;
la réaction de la liqueur mère synthétique pour préparer la zéolithe CHA ; et
l'échange d'ions de la zéolithe CHA avec un métal de transition,
la zéolithe A étant une zéolithe A échangée NH4 et le matériau inducteur de structure comprenant de l'hydroxyde de triméthyl adamantyl ammonium (AdaOH).

2. Procédé selon la revendication 1, dans lequel la silice est de la silice pyrogénique ou de la silice colloïdale.

3. Procédé selon la revendication 1, dans lequel le matériau de complexation est une solution d'hydroxyde alcalin incluant de l'hydroxyde de sodium.

4. Procédé selon la revendication 1, dans lequel la liqueur mère synthétique comprend environ 5 % en moles à environ 30 % en moles de zéolithe A et environ 70 % en moles à environ 95 % en moles de silice sur la base d'une quantité totale de source de silice et d'alumine.

5. Procédé selon la revendication 1, dans lequel la liqueur mère synthétique comprend :
environ 0,1 partie en moles à environ 0,4 partie en mole de matériau inducteur de structure ; et
environ 0,1 partie en mole à environ 0,4 partie en moles de matériau de complexation sur la base d'une 1 partie en moles de source de silice et d'alumine.

6. Procédé selon la revendication 1, dans lequel, dans le deuxième processus, la réaction est effectuée dans les conditions d'environ 120 °C à environ 140 °C, environ 2 jours à environ 6 jours, et à environ 0 tpm à environ 60 tpm.

7. Procédé selon la revendication 1, dans lequel, dans le deuxième processus, après la réaction, le procédé comprend en outre la cuisson à environ 500 °C à environ 600 °C pendant 4 à 12 heures.

8. Procédé selon la revendication 1, dans lequel la zéolithe CHA préparée dans le deuxième processus possède un ratio Si/Al en moles d'environ 15 à environ 30.

9. Procédé selon la revendication 1, dans lequel le métal de transition comprend du Cu, du Fe, du Co, du Ti, du Zn, de l'Ag, du Mn, ou une combination de ceux-ci.

10. Procédé selon la revendication 1, dans lequel le catalyseur SCR comprend environ 1 % en poids à environ 5 % en poids de métal de transition sur la base du catalyseur total.

11. Procédé selon la revendication 1, dans lequel dans le troisième processus, l'échange d'ions est effectué de environ 25 °C à environ 80 °C pendant environ 1 heure à environ 24 heures.
